# EUROPEAN PATENT APPLICATION

(11) **EP 4 807 323 A1**
(43) Date of publication of application: **16.09.2026**
(21) Application number: 24916593.7
(22) Date of filing: 27.11.2024
(51) Int. Cl.: G01C 21/20

(54) **METHOD AND APPARATUS FOR GENERATING TOPOLOGICAL PATH MAP, ROBOT, AND STORAGE MEDIUM**

(30) Priority: 08.01.2024 CN 202410023782
(71) Applicant: Shenzhen Pudu Technology Co., Ltd., Shenzhen, Guangdong 518000 (CN)
(72) Inventor: CHEN, Jingwei, Shenzhen, Guangdong 518000 (CN); SHANG, Chengsi, Shenzhen, Guangdong 518000 (CN)
(74) Representative: KIPA AB
(86) International application number: PCT/CN2024/134974
(87) International publication number: WO 2025/148543

(57) **Abstract**

The present application discloses a method and apparatus for generating a topological path map, a robot, and a storage medium. The method comprises: acquiring a teaching trajectory corresponding to a robot; determining target sampling points from a sampling point sequence of the teaching trajectory; generating paths comprising the target sampling points, and forming a first path map on the basis of the target sampling points and the paths; determining a target circular path on the basis of morphological features of circular paths in the first path map; removing the target circular path, and generating a target path on the basis of the target sampling points comprised in the removed target circular path; and updating the first path map on the basis of the target path to obtain a target topological path map.

## Description

### CROSS-REFERENCE TO RELATED APPLICATIONS

The present disclosure claims priority to a Chinese patent application filed to the Chinese Patent Office on January 08, 2024, the application number and name of which are 202410023782.4 and "METHOD AND APPARATUS FOR GENERATING TOPOLOGICAL PATH MAP, ROBOT, AND STORAGE MEDIUM", and the content of all of which is incorporated by reference in the present disclosure.

### TECHNICAL FIELD

The present disclosure relates to the technical field of robots, and in particular to a topological path graph generation method, a topological path graph generation apparatus, a robot, and a storage medium.

### BACKGROUND

With the development of robot technology, a method, which utilizes a spatial feature of a robot's operational area to generate a navigation map capable of guiding the robot's spatial movement, holds significant importance for enabling the mobile robot to perform a corresponding task smoothly.

In existing technologies, a corresponding topological path graph is generally generated using an image morphology method such as Generalized Voronoi Diagram. However, the generated path graph can only provide rough path planning for the robot, which results in poor accuracy.

### SUMMARY

A topological path graph generation method, a topological path graph generation apparatus, a robot, and a storage medium are provided according to various embodiments of the present disclosure.

The present disclosure provides a topological path graph generation method executed by a robot. The method includes steps of:

obtaining a teaching trajectory corresponding to the robot, where the teaching trajectory includes a sampling-point sequence;

determining target sampling points from each sampling point in the sampling-point sequence based on a preset screening rule, where the preset screening rule is determined based on a sampling frequency of each sampling point or a curvature of an arc formed by each sampling point and a corresponding adjacent sampling point;

connecting the target sampling points to generate each path containing the target sampling points, and constructing a first path graph based on the target sampling points and each path;

determining a target cyclic path from each cyclic path based on a morphological feature of each cyclic path in the first path graph;

removing the target cyclic path, and generating a target path based on the target sampling points contained in the removed target cyclic path; and

updating the first path graph based on the target path to obtain a target topological path graph.

Details of one or more embodiments of the present disclosure are set forth in the following drawings and description. Other features and advantages of the present disclosure become apparent from the description, drawings, and claims.

### BRIEF DESCRIPTION OF DRAWINGS

In order to provide a clearer explanation of technical solutions in the embodiments of the present disclosure or prior art, a brief description is given to the accompanying drawings required for the description of the present embodiments or prior art. Obviously, the accompanying drawings are only some embodiments of the present disclosure. For those ordinary skilled in the art, other drawings can be obtained based on the accompanying drawings without any creative efforts.
FIG. 1 is a schematic flowchart of a topological path graph generation method according to one embodiment.
FIG. 2 is a schematic flowchart of a step of determining target sampling points according to one embodiment.
FIG. 3 is a schematic flowchart of updating a first path graph according to one embodiment.
FIG. 4 is a schematic flowchart of determining a target cyclic path according to one embodiment.
FIG. 5 is a schematic flowchart of removing the target cyclic path according to one embodiment.
FIG. 6 is a schematic flowchart of removing the target cyclic path according to another embodiment.
FIG. 7 is a schematic flowchart of removing the target cyclic path according to yet another embodiment.
FIG. 8 is a schematic diagram of a teaching trajectory of a robot according to one embodiment.
FIG. 9 is a schematic diagram of the first path graph including the target sampling points and a path of the target sampling points according to one embodiment.
FIG. 10 is a schematic diagram of the first path graph after merging the target sampling points that are too close according to one embodiment.
FIG. 11 is a partial schematic diagram of splitting a directly adjacent path of a reference sampling point according to one embodiment.
FIG. 12 is a schematic diagram of the first path graph after splitting the directly adjacent path of each sampling point according to one embodiment.
FIG. 13 is a partial schematic diagram of removing the target cyclic path according to one embodiment.
FIG. 14 is a schematic diagram of the first path graph after removing the target cyclic path according to one embodiment.
FIG. 15 is a structural block schematic diagram of a topological path graph generation apparatus according to one embodiment.
FIG. 16 is a schematic diagram of an internal structure of the robot according to one embodiment.

### DETAILED DESCRIPTION OF EMBODIMENTS

In order to facilitate understanding of the present disclosure, the present disclosure is described more fully below with reference to the related drawings. Some embodiments of the present disclosure are given in the drawings. However, the present disclosure can be implemented in many different forms and is not limited to the embodiments described herein. A purpose of providing these embodiments is to make the understanding of the present disclosure more thorough and comprehensive.

Unless otherwise defined, all technical and scientific terms used herein have the same meaning as those commonly understood by those skilled in the art to which the present disclosure belongs. The terms used herein in the specification of the present disclosure are for a purpose of describing specific embodiments and are not intended to limit the present disclosure. The term "and/or" used herein includes any and all combinations of one or more of associated listed items.

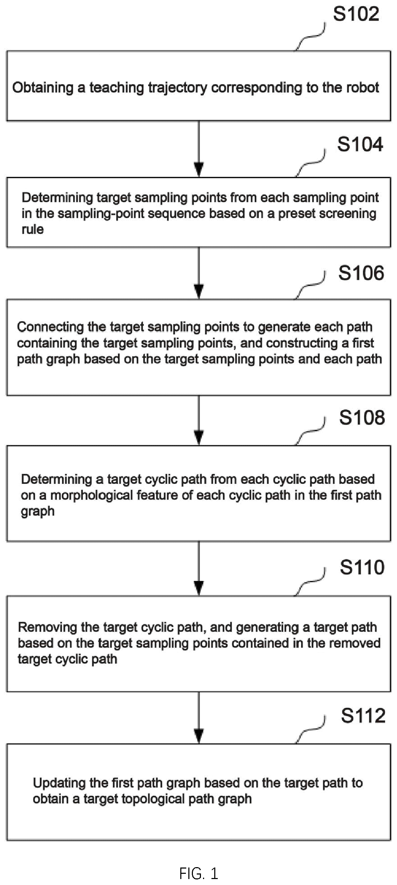

In one embodiment, as shown in FIG. 1, a topological path graph generation method is provided. The present embodiment uses the method applied to a robot as an example for illustration. It is understood that the method may be applied to a server, and may be applied to a system including the robot and server and implemented through interaction between the robot and the server. In the present embodiment, the topological path graph generation method is executed by the robot, and the method includes following steps.

Step S102: obtaining a teaching trajectory corresponding to the robot.

It is understood that the teaching trajectory includes a sampling-point sequence, and the teaching trajectory is a point trajectory generated by a user teaching the robot to move in a corresponding operational scenario (such as a restaurant, hotel, workshop, etc.). The teaching trajectory is a trajectory of the robot's movement when the user performs a teaching operation on the robot in the operational scenario, and the teaching trajectory represents a path that the user expects the robot to move. The teaching operation includes but is not limited to the following manners: the user teaches the robot to move according to the user's expected path, the user controls the robot to move according to the user's expected path through a remote control device, and the robot is controlled to track the user or track other self-moving objects to move according to the user's expected path. Generally, the robot is made to move once or multiple times in the operational scenario and return to a starting point through the teaching operation. In one example, the point trajectory may be collected at a preset duration. The preset duration can be set according to actual needs such as 0.1 s to 1 s, which may be 0.1 s, 0.5 s, or 1 s, and there is no any limitation herein. In other examples, the point trajectory may be collected according to a preset displacement interval and/or a preset angle interval, such as once every 0.2 m of movement, or once every 20 degrees of angle change, and there is no any value limitation herein. The operational scenario may be pre-drawn in a planar graph, or may be drawn during teaching using laser point cloud collected by a laser radar and/or depth image data collected by a depth camera.

Step S104: determining target sampling points from each sampling point in the sampling-point sequence based on a preset screening rule.

The preset screening rule is determined based on a sampling frequency of each sampling point or a curvature of an arc formed by each sampling point and a corresponding adjacent sampling point adjacent to each sampling point.

The robot analyzes the sampling frequency corresponding to each sampling point of the sampling-point sequence. When the sampling frequency of one sampling point is greater than a frequency threshold, the one sampling point and the sampling points within a preset range of the one sampling point are determined as the target sampling points. At the same time, the robot further analyzes the curvature corresponding to each sampling point of the sampling-point sequence, and determines the sampling point whose curvature is greater than a curvature threshold as the target sampling point. A method for calculating the curvature corresponding to the sampling point may be determined based on the arc formed by an adjacent sampling point corresponding to a current sampling point in a previous moment, an adjacent sampling point corresponding to the current sampling point in a next moment, and the current sampling point. The frequency threshold and the curvature threshold may be set by a technician according to spatial and layout features of the current operational scenario of the robot.

It can be understood that when the sampling frequency of the corresponding sampling point is greater than the frequency threshold, it indicates that the robot passes through the corresponding sampling point multiple times during teaching, therefore the corresponding sampling point may be an intersection in the operational scenario, and thus it is necessary to use the sampling point at the intersection and the sampling point within the preset range of the sampling point at the intersection as the target sampling points. In addition, when the curvature of the corresponding sampling point is greater than the curvature threshold, it indicates that the corresponding sampling point is a turning point in the operational scenario, and thus it is necessary to select the turning point as the target sampling point.

Step S106: connecting the target sampling points to generate each path containing the target sampling points, and constructing a first path graph based on the target sampling points and each path.

The path is a connection line between target sampling points, and the first path graph includes a position of each target sampling point and a position of each connection line (the path) between the target sampling points in the operational scenario.

The robot adds the target sampling points screened and determined in the above steps to the planar graph corresponding to the operational scenario, and connects each target sampling point sequentially based on a chronological order, thereby generating each path containing the target sampling points, so that each target sampling point in the planar graph and each corresponding path construct the first path graph.

Step S108: determining a target cyclic path from each cyclic path based on a morphological feature of each cyclic path in the first path graph.

The morphological feature is used to represent a morphology of a two-dimensional graph enclosed by each cyclic path, which may be area, perimeter, or area-to-perimeter ratio.

The robot calculates the morphological feature of the two-dimensional graph enclosed by each cyclic path in the first path graph, then compares the morphological feature corresponding to each cyclic path with a standard morphology to obtain a comparison result, and based on the comparison result, determines the target cyclic path from each cyclic path. The robot may calculate the area-to-perimeter ratio of the two-dimensional graph enclosed by each cyclic path, and then compares the area-to-perimeter ratio with a preset threshold. When the area-to-perimeter ratio is greater than the preset threshold, it indicates that the cyclic path is "larger", and it can be considered that the "larger" cyclic path reflects a normal cruising path in the operational scenario and does not need to be removed. When the area-to-perimeter ratio is smaller than the preset threshold, it indicates that the cyclic path is "smaller", which is very likely to be an erroneous cyclic path generated during teaching the robot to move, and does not mean that the user expects the robot to loop on the "smaller" cyclic path. At this time, the "smaller" cyclic path needs to be removed, therefore the "smaller" cyclic path is determined as the target cyclic path. The preset threshold is determined by the spatial feature, layout feature, etc. of the operational scenario.

It is understood that during teaching the robot to construct the teaching trajectory, there may be teaching pause, dynamic-obstacle avoiding, repeated teaching over a short distance, and other situations. Therefore, compared with ideal teaching, actual teaching inevitably leads to the robot constructing the erroneous cyclic path for the target sampling points, so that the erroneous cyclic path (corresponding to the above-mentioned target cyclic path) needs to be effectively removed. Removing the "smaller" cyclic path may improve the accuracy of the topological path graph and better meet the user's expectation, which further improves the robot's operating efficiency.

Step S110: removing the target cyclic path, and generating a target path based on the target sampling points contained in the removed target cyclic path.

The robot determines each target cyclic path in the first path graph based on the above steps, removes each target cyclic path in sequence, and regenerates the target path based on the target sampling points contained in the removed target cyclic path. The robot may determine a corresponding exit sampling point in the target sampling points contained in the removed target cyclic path, and then generate a new target path based on the exit sampling point. The exit sampling point is the target sampling point that contains at least three adjacent paths.

Step S112: updating the first path graph based on the target path to obtain a target topological path graph.

The target topological path graph is used to perform path navigation on the robot.

The robot may replace the target cyclic path in the first path graph with the corresponding target path, thereby completing updating the first path graph, so as to obtain the target topological path graph.

In the present embodiment, based on the sampling points corresponding to the robot's teaching trajectory, sampling-point screening is performed based on the sampling frequency of each sampling point and the curvature of the arc formed by each sampling point and the corresponding adjacent sampling point, thereby effectively determining the sampling points at the intersection and the target sampling points at the turning point in the teaching trajectory. The first path graph is then constructed based on the target sampling points and each path determined by connecting them. Subsequently, based on the morphological feature of each cyclic path in the first path graph, the target cyclic path to be removed is determined. The target cyclic path is then removed, so that the first path graph after removing the target cyclic path can more accurately represent a position of a reachable path for the robot, and eliminate erroneous and redundant paths in the path graph, thereby improving the accuracy of the generated path graph, and thus making the path navigation of the robot using the path graph more accurate and efficient.

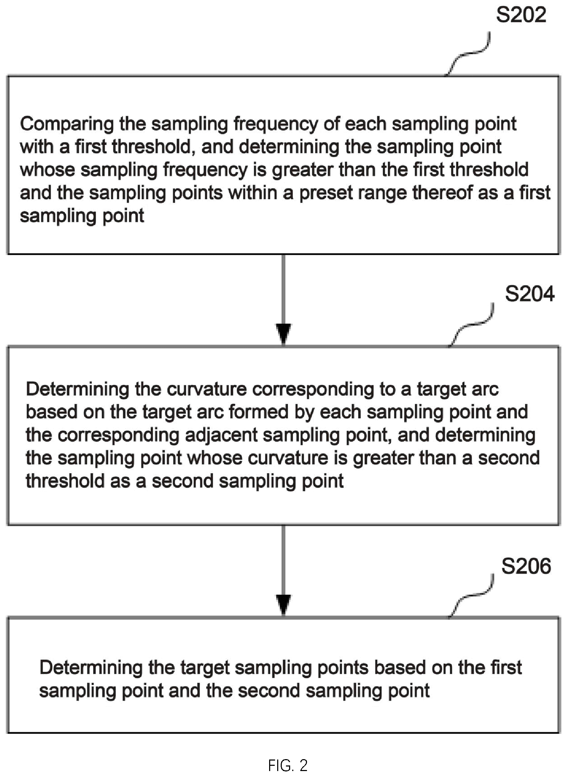

In one embodiment, as shown in FIG. 2, the step of determining target sampling points from each sampling point in the sampling-point sequence based on a preset screening rule, includes following steps.

Step S202: comparing the sampling frequency of each sampling point with a first threshold, and determining each sampling point whose sampling frequency is greater than the first threshold and the sampling points within a preset range thereof as a first sampling point.

The first threshold is determined based on the spatial feature (such as a position layout of a road, furniture, etc.) of the operational scenario corresponding to the first path graph, and can be flexibly set by the technician based on the operational scenario.

The robot may compare the sampling frequency corresponding to each sampling point with the first threshold in sequence. When the current sampling frequency is greater than the first threshold, it indicates that the sampling point is a sampling point at the intersection. Then the sampling point corresponding to the current sampling frequency and the sampling points within the preset range of the sampling point corresponding to the current sampling frequency are determined as the first sampling points.

Step S204: determining the curvature corresponding to a target arc based on the target arc formed by each sampling point and the corresponding adjacent sampling point, and determining the sampling point whose curvature is greater than a second threshold as a second sampling point.

The second threshold is determined based on the spatial feature (such as the position layout of the road, furniture, etc.) of the operational scenario corresponding to the first path graph, and can be flexibly set by the technician based on the operational scenario.

The robot may construct the corresponding arc based on each sampling point and the corresponding adjacent sampling point (which may be a plurality of adjacent points before and after in the chronological order), calculate the curvature corresponding to the arc, and then compare the corresponding curvature with the second threshold. When the corresponding curvature is greater than the second threshold, it indicates that a degree of curvature of the teaching trajectory at the sampling point corresponding to the curvature exceeds a preset value, and it is considered that there is a turning point/corner at the sampling point in the operational scenario. Therefore, the sampling point corresponding to the curvature is determined as the second sampling point.

Step S206: determining the target sampling points based on the first sampling point and the second sampling point.

The robot may directly use the first sampling point and second sampling point determined in the above steps as the target sampling points, which can accurately reflect the positions of the intersection point (the first sampling point) and turning point (the second sampling point) in the robot's teaching trajectory.

In the present embodiment, the sampling frequency of each sampling point is compared with the first threshold, the sampling point whose sampling frequency is greater than the first threshold is determined as the first sampling point, the curvature corresponding to the target arc is determined based on the target arc formed by each sampling point and the corresponding adjacent sampling point, the sampling point whose curvature is greater than the second threshold is determined as the second sampling point, and the target sampling points are determined based on the first sampling point and the second sampling point, so that the sampling point used to represent the intersection and the sampling point at the turning corner in the teaching trajectory of the robot are effectively screened out, thereby constructing each target sampling point that can accurately reflect the spatial feature of the operational scenario and improving the reliability and accuracy of each target sampling point.

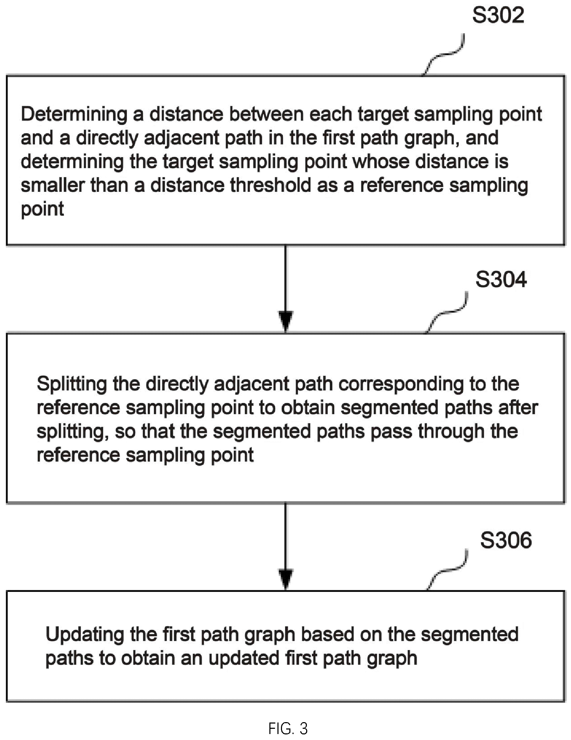

In one embodiment, as shown in FIG. 3, after the step of connecting the target sampling points to generate each path containing the target sampling points, and constructing a first path graph based on the target sampling points and each path, the method further includes following steps.

Step S302: determining a distance between each target sampling point and a directly adjacent path in the first path graph, and determining the target sampling point whose distance is less than a distance threshold as a reference sampling point.

The directly adjacent path is the path closest to the corresponding target sampling point and but not the path where the corresponding target sampling point is located, and the distance threshold can be flexibly set by the technician according to the spatial layout feature of the operational scenario of the robot.

The robot may optimize the path that is too close to the target sampling point in the first path graph. The robot may determine the distance between each target sampling point in the first path graph and its directly adjacent path in sequence, and compare the distance with the distance threshold. When the distance is smaller than the distance threshold, it indicates that the target sampling point is too close to the corresponding directly adjacent path. At this time, it is determined that path generation of the directly adjacent path is unreasonable, and a correction needs to be performed based on the directly adjacent path corresponding to the target sampling point. Therefore, the target sampling point corresponding to the directly adjacent path is determined as the reference sampling point.

Step S304: splitting the directly adjacent path corresponding to the reference sampling point to obtain segmented paths after splitting, so that the segmented paths pass through the reference sampling point.

For example, when the correction is performed based on the directly adjacent paths (p1 and p3) corresponding to the reference sampling point, the directly adjacent paths (p1 and p3) are split to obtain the segmented paths (p1, p2, and p3), so that the segmented paths pass through the reference sampling point.

Step S306: updating the first path graph based on the segmented paths to obtain an updated first path graph.

In the present embodiment, the distance between each target sampling point and its directly adjacent path in the first path graph is determined, the target sampling point whose distance is smaller than the distance threshold is determined as the reference sampling point, the directly adjacent path corresponding to the reference sampling point is split to obtain the split segmented paths so that the segmented paths pass through the reference sampling point, and the first path graph is updated based on the segmented paths to obtain the updated first path graph, thereby realizing the correction of erroneous/redundant path information in the first path graph, and effectively improving the reliability and accuracy of the first path graph.

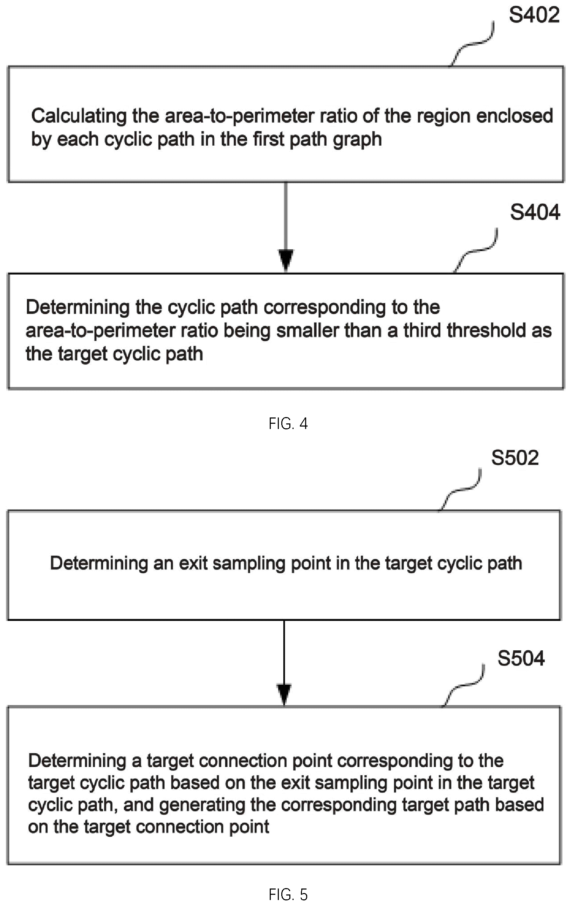

In one embodiment, as shown in FIG. 4, the step of determining a target cyclic path from each cyclic path based on a morphological feature of each cyclic path in the first path graph, includes following steps.

Step S402: calculating the area-to-perimeter ratio of a region enclosed by each cyclic path in the first path graph.

The area-perimeter ratio is a ratio of the region's area to the region's perimeter.

Step S404: determining the cyclic path whose corresponding area-to-perimeter ratio being smaller than a third threshold as the target cyclic path.

The third threshold is flexibly set by the technician according to the spatial layout feature of the operational scenario of the robot.

It is understood that during teaching the robot to construct the teaching trajectory, there may be teaching pause, dynamic-obstacle avoiding, repeated teaching over a short distance, and other situations. Therefore, compared with ideal teaching, actual teaching inevitably leads to the robot building the erroneous cyclic path for the target sampling points, so that the erroneous cyclic path (corresponding to the above-mentioned target cyclic path) needs to be effectively removed.

In the present embodiment, the area-to-perimeter ratio of the region enclosed by each cyclic path in the first path graph is calculated, and the cyclic path whose corresponding area-to-perimeter ratio is smaller than the third threshold is determined as the target cyclic path, which enable the target cyclic path that needs to be corrected/removed to be quickly and effectively determined based on a magnitude relationship between the area-to-perimeter ratio and the third threshold, thereby improving the accuracy and reliability of the subsequently updated target topological path graph.

In one embodiment, as shown in FIG. 5, the step of removing the target cyclic path, and generating a target path based on the target sampling points contained in the removed target cyclic path, includes following steps.

Step S502: determining an exit sampling point in the target cyclic path.

The exit sampling point is the target sampling point that contains at least three adjacent paths.

Step S504: determining a target connection point corresponding to the target cyclic path based on the exit sampling point in the target cyclic path, and generating the corresponding target path based on the target connection point.

The robot may determine the corresponding target connection point based on the number of the exit sampling points contained in the target cyclic path. That is, when the target cyclic path contains only one exit sampling point, the exit sampling point is directly retained, and other target sampling point and its path on the target cyclic path except the exit sampling point are removed. When the target cyclic path contains only two exit sampling points, the two exit sampling points are retained and used as the target connection points, other target sampling point on the target cyclic path are removed, and the two target connection points are directly connected to each other to generate the corresponding target path. When the target cyclic path contains three or more exit sampling points, each exit sampling point is retained, each connection line (path) of the target cyclic path is removed, the corresponding target connection point is determined based on a center point of the two-dimensional planar region enclosed by the target cyclic path, and then each retained exit sampling point is connected to the target connection point, so as to generate the corresponding target path.

In the present embodiment, the exit sampling point in the target cyclic path is determined, the target connection point corresponding to the target cyclic path is determined based on the exit sampling point in the target cyclic path, and the corresponding target path is generated based on the target connection point, thereby selecting a suitable cyclic-path removal method based on a path feature of each target cyclic path itself, and effectively improving the reliability of the path graph.

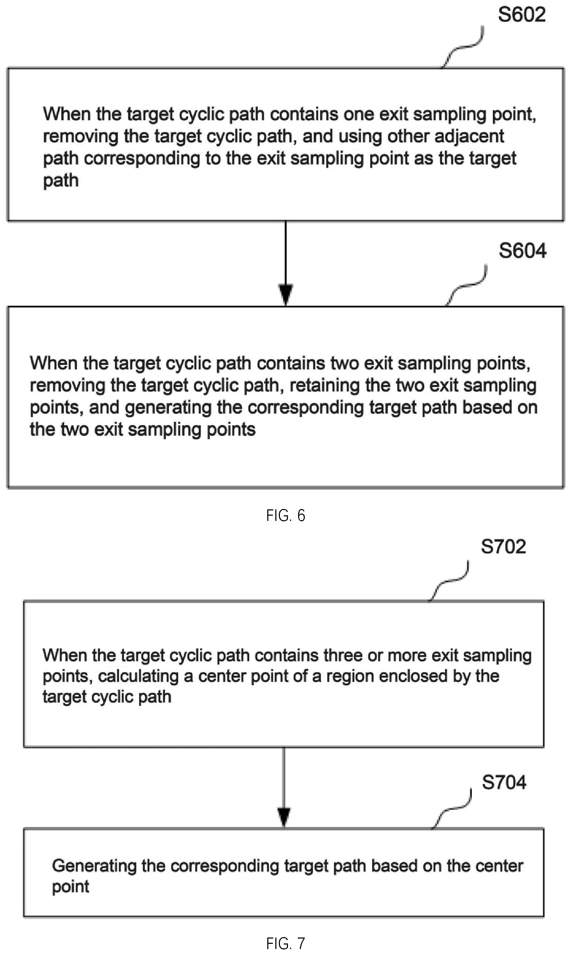

In one embodiment, as shown in FIG. 6, the step of determining a target connection point corresponding to the target cyclic path based on the exit sampling point in the target cyclic path, and generating the corresponding target path based on the target connection point, includes following steps.

Step S602: when the target cyclic path contains one exit sampling point, removing the target cyclic path, and using other adjacent path corresponding to the exit sampling point as the target path.

Step S604: when the target cyclic path includes two exit sampling points, removing the target cyclic path, retaining the two exit sampling points, and generating the corresponding target path based on the two exit sampling points.

In the present embodiment, by judging an attribute feature of the exit sampling point contained in the target cyclic path, a concise and effective method for removing the target cyclic path is determined, thereby effectively ensuring the reliability and accuracy of the generated path graph.

In one embodiment, as shown in FIG. 7, the step of determining a target connection point corresponding to the target cyclic path based on the exit sampling point in the target cyclic path, and generating the corresponding target path based on the target connection point, also includes following steps.

Step S702: when the target cyclic path contains three or more exit sampling points, calculating the center point of the region enclosed by the target cyclic path.

When the target cyclic path contains three or more exit sampling points, the robot may calculate a geometric center or centroid of the two-dimensional planar region enclosed by the target cyclic path. The robot may also select any point in the two-dimensional planar region, not limited to the geometric center or the centroid.

Step S704: generating the corresponding target path based on the center point.

The robot may connect each exit sampling point of the target cyclic path to the center point to generate the corresponding target path.

After the robot calculates the center point of the region enclosed by the target cyclic path, the robot may detect whether there is an obstacle at the center position in the operational scenario/first path graph. When the obstacle exists, the robot may then construct an inscribed circle having a largest diameter (or an inscribed circle having any diameter) within a remaining free space (any area without the obstacle) in the two-dimensional planar region, then use a center of the inscribed circle (or any point on or inside the inscribed circle) as the target connection point corresponding to the target cyclic path, and then connect each exit sampling point of the target cyclic path to the target connection point to generate the corresponding target path.

In the present embodiment, when the target cyclic path contains three or more exit sampling points, the center point of the region enclosed by the target cyclic path is calculated, and then the corresponding target path is generated based on the center point, so as to effectively determine the target connection point corresponding to the complex target cyclic path, thereby effectively removing the target cyclic path and effectively ensuring the reliability and accuracy of the generated path graph.

The present application further provides an application scenario, which applies the above-mentioned topological path graph generation method. The method is applied to a scenario in which a path graph that can be used for robot navigation is generated based on a teaching trajectory of a robot. The application of the topological path graph generation method in the application scenario is as follows.

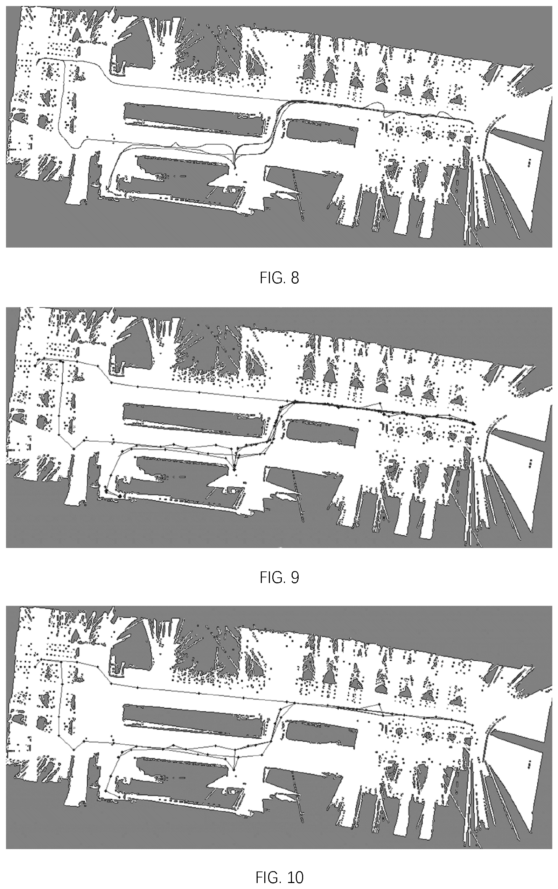

The teaching trajectory of the robot is obtained, which includes a sampling-point sequence collected by the robot during teaching, as shown in FIG. 8. Then, based on degree of density of each adjacent sampling point in the sampling-point sequence, the sampling-point sequence is interpolated to generate an optimized sampling-point sequence, so that a distance between each adjacent sampling point in the optimized sampling-point sequence is smaller than a distance threshold dist1.

A sampling frequency of each sampling point in the optimized sampling-point sequence is compared with a first threshold. When the sampling frequency is greater than the first threshold, it indicates that the sampling point corresponding to the sampling frequency is a location (the location may be considered as a pending intersection point) that the robot passes through multiple times during teaching. Therefore, any sampling point within a target range corresponding to the sampling point corresponding to the sampling frequency is selected as an important intersection mark point (i.e., a target sampling point). At the same time, a curvature corresponding to an arc determined by each sampling point in the optimized sampling point sequence and a corresponding adjacent sampling point is compared with a second threshold. When the curvature is greater than the second threshold, it indicates that the sampling point corresponding to the curvature is a sampling point at a turning corner, and the sampling point corresponding to the curvature is selected as the target sampling point.

The target sampling points determined in the above steps are connected in sequence based on a chronological order of collecting to generate each corresponding path, and then a first path graph including the target sampling points and each corresponding path is constructed, as shown in FIG. 9. Then, the points for which the distance to their adjacent sampling points in the first path graph is smaller than a preset distance are merged, so as to obtain a merged first path graph, as shown in FIG. 10.

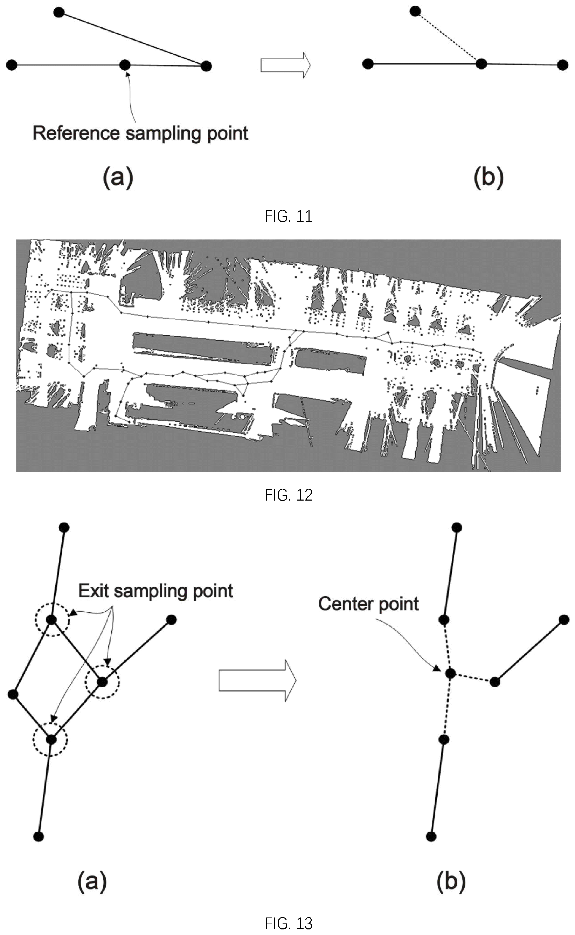

A distance between each sampling point and its closest path in the above-mentioned first path graph (shown in FIG. 10) is compared with a preset threshold. When the distance is smaller than the preset threshold, the closest path is split. As shown in FIG. 11, the path shown in (a) is split to obtain the path shown by broken lines in (b), so that the split path passes through the corresponding sampling point, and then the first path graph is updated based on each split path to obtain an updated first path graph as shown in FIG. 12.

Based on the first path graph shown in FIG. 12, each cyclic path in the first path graph is analyzed as follows.

An area-to-perimeter ratio of each cyclic path is calculated, and is then compared with a third threshold. When the area-to-perimeter ratio is smaller than the third threshold, the cyclic path corresponding to the area-to-perimeter ratio is determined as a target cyclic path. It should be noted that the existence of cyclic path means that there are at least two reachable paths between two points on the path, which is generally due to that forward and return teaching trajectories do not coincide.

An exit sampling point in each target cyclic path is identified, and the exit sampling point is the target sampling point that contains at least three adjacent paths. That is, when a cyclic path exists, and one sampling point has other adjacent sampling point besides two adjacent sampling points on the cyclic path, the one sampling point is the exit sampling point.

Based on the number of the exit sampling points contained in the target cyclic path, the corresponding target connection point is determined. That is, when the target cyclic path contains only one exit sampling point, the exit sampling point is directly retained, and other sampling point and path thereof on the target cyclic path except the exit sampling point are removed. When the target cyclic path contains only two exit sampling points, the two exit sampling points are retained and used as the target connection points, other sampling point on the target cyclic path is deleted, and the two target connection points are directly connected to each other to generate a corresponding target path. When the target cyclic path contains three or more exit sampling points, each exit sampling point is retained and each connection line (path) of the target cyclic path is deleted, a center point of a two-dimensional planar region formed by the target cyclic path is determined as the corresponding target connection point, and each retained exit sampling point is connected to the target connection point, so as to generate the corresponding target path. As shown in FIG. 13, after removing the target cyclic path shown in (a), the target path shown by broken lines shown in (b) is generated according to the center point of the target cyclic path.

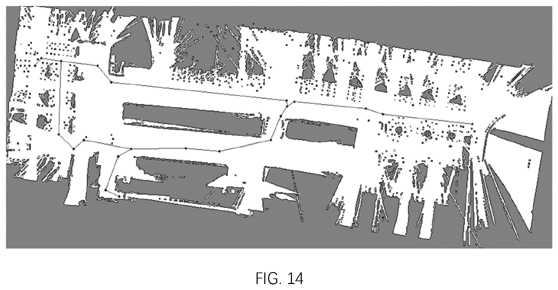

Finally, after removing each target cyclic path and generating the corresponding target path according to the above steps, the first path graph is updated based on each target path to obtain an updated target topological path graph, as shown in FIG. 14. Then a local search method is used to fine-tune a position of each sampling point in the target topological path graph, so that each path segment in the target topological path graph is smoother and fits the initial teaching trajectory.

In the present embodiment, based on the sampling points corresponding to the robot's teaching trajectory, the sampling-point screening is performed based on the sampling frequency of each sampling point and the curvature of the arc formed by each sampling point and its adjacent sampling point, thereby effectively determining the sampling point at the intersection and the target sampling points at the turning point in the teaching trajectory. The first path graph is then constructed based on the target sampling points and each path determined by connecting them. Subsequently, based on the morphological feature of each cyclic path in the first path graph, the target cyclic path to be removed is determined. The target cyclic path is then removed, so that the first path graph after removing the target cyclic path can more accurately represent the position of the reachable path for the robot, and eliminate the erroneous and redundant paths in the path graph, thereby improving the accuracy of the generated path graph, and thus making the path navigation of the robot using the path graph more accurate and efficient.

It should be understood that although the steps in the flowcharts of the above-described embodiments are shown in sequence as indicated by arrows, these steps are not necessarily executed in an order indicated by the arrows. Unless explicitly stated herein otherwise, the execution of these steps is not strictly limited in the order, and may be performed in other orders. Moreover, at least a part of the steps in the flowcharts of the above-described embodiments may include multiple sub-steps or multiple stages, which are not necessarily completed at the same time but may be executed at different times. The order in which these sub-steps or stages are executed is not necessarily sequential but may be performed alternately or interchangeably with other steps or with at least a part of the sub-steps or stages of other steps.

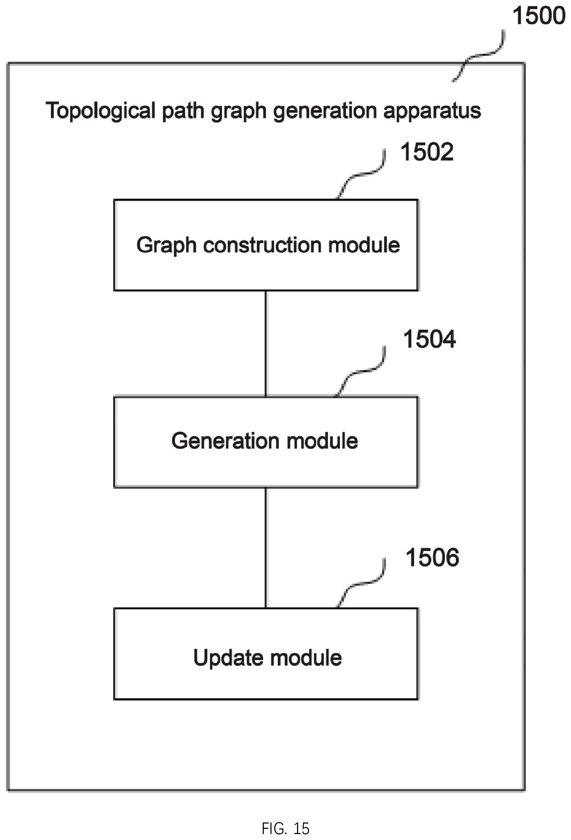

In one embodiment, as shown in FIG. 15, a topological path graph generation apparatus is provided. The apparatus may adopt a software module or a hardware module, or a combination of the software module and hardware module to become a part of a robot. The apparatus includes: a graph construction module 1502, a generation module 1504, and an update module 1506.

The graph construction module 1502 is configured to: obtain a teaching trajectory corresponding to the robot, where the teaching trajectory includes a sampling-point sequence; determine target sampling points from each sampling point in the sampling-point sequence based on a preset screening rule, where the preset screening rule is determined based on a sampling frequency of each sampling point or a curvature of an arc formed by each sampling point and a corresponding adjacent sampling point; and connect the target sampling points to generate each path containing the target sampling points, and construct a first path graph based on the target sampling points and each path.

The generation module 1504 is configured to: determine a target cyclic path from each cyclic path based on a morphological feature of each cyclic path in the first path graph, remove the target cyclic path, and generate a target path based on the target sampling points contained in the removed target cyclic path;

The update module 1506 is configured to: update the first path graph based on the target path to obtain a target topological path graph, where the target topological path graph is configured for path navigation of the robot.

In one embodiment, the graph construction module 1502 is further configured to: compare the sampling frequency of each sampling point with a first threshold, and determine the sampling point whose sampling frequency is greater than the first threshold and the samplings point within a preset range thereof as a first sampling point; determine the curvature corresponding to the target arc based on the target arc formed by each sampling point and the corresponding adjacent sampling point, and determine the sampling point whose curvature is greater than a second threshold as a second sampling point; and determine the target sampling points based on the first sampling point and the second sampling point.

In one embodiment, the graph construction module 1502 is further configured to: determine a distance between each target sampling point and a directly adjacent path in the first path graph, and determine the target sampling point whose distance is smaller than a distance threshold as a reference sampling point, where the directly adjacent path is the path closest to the corresponding target sampling point and but not the path where the corresponding target sampling point is located; split the directly adjacent path corresponding to the reference sampling point to obtain segmented paths after splitting, so that the segmented paths pass through the reference sampling point; and update the first path graph based on the segmented paths to obtain an updated first path graph.

In one embodiment, the generation module 1504 is further configured to: calculate an area-to-perimeter ratio of a region enclosed by each cyclic path in the first path graph; and determine the cyclic path corresponding to the area-to-perimeter ratio being smaller than a third threshold as the target cyclic path.

In one embodiment, the generation module 1504 is further configured to: determine an exit sampling point in the target cyclic path, where the exit sampling point is the target sampling point that has at least three adjacent paths; and determine a target connection point corresponding to the target cyclic path based on the exit sampling point in the target cyclic path, and generate the corresponding target path based on the target connection point.

In one embodiment, the generation module 1504 is further configured to: when the target cyclic path contains one exit sampling point, remove the target cyclic path, and use other adjacent path corresponding to the exit sampling point as the target path; and when the target cyclic path contains two exit sampling points, remove the target cyclic path, retain the two exit sampling points, and generate the corresponding target path based on the two exit sampling points.

In one embodiment, the generation module 1504 is further configured to: when the target cyclic path contains three or more exit sampling points, calculate a center point of the region enclosed by the target cyclic path; and generate the corresponding target path based on the center point.

In the above-mentioned topological path graph generation apparatus, based on the sampling points corresponding to the robot's teaching trajectory, the sampling-point screening is performed based on the sampling frequency of each sampling point and the curvature of the arc formed by each sampling point and the corresponding adjacent sampling point, thereby effectively determining the sampling points at the intersection and the target sampling points at the turning point in the teaching trajectory. The first path graph is then constructed based on the target sampling points and each path determined by connecting them. Subsequently, based on the morphological feature of each cyclic path in the first path graph, the target cyclic path to be removed is determined. The target cyclic path is then removed, so that the first path graph after removing the target cyclic path can more accurately represent the position of the reachable path for the robot, and eliminate the erroneous and redundant paths in the path graph, thereby improving the accuracy of the generated path graph, and thus making the path navigation of the robot using the path graph more accurate and efficient.

The definition of the topological path graph generation apparatus may refer to the definition of the topological path graph generation method above, which will not be repeated herein. Each module in the above-mentioned topological path graph generation apparatus may be implemented in whole or in part by a software, a hardware, or a combination thereof. The above-mentioned modules may be embedded in or independent of a processor in the robot in the form of hardware, or may be stored in a memory in the robot in the form of software, so that the processor can call and execute operations corresponding to the above modules.

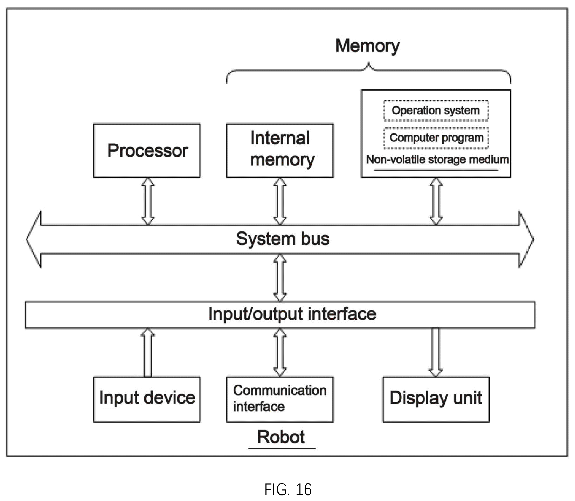

In one embodiment, a robot is provided, and an internal structure of the robot may be shown in FIG. 16. The robot includes a processor, a memory, a communication interface, a display screen, and an input device all connected through a system bus. The processor of the robot is configured to provide computing and control capabilities. The memory of the robot includes a non-volatile storage medium and an internal memory. The non-volatile storage medium stores an operation system and a computer-readable instruction. The internal memory provides an operation environment for the operation system and computer-readable instruction in the non-volatile storage medium. The communication interface of the robot is configured to communicate with an external terminal in a wired or wireless manner. The wireless manner may be achieved through Wi-Fi, an operator network, near field communication (NFC), or other technologies. When the computer-readable instruction is executed by the processor, the topological path graph generation method is implemented. The display screen of the robot may be a liquid-crystal display screen or an electronic-ink display screen. The input device of the robot may be a touch layer covering the display screen, or may be a button, a trackball, or a touch pad all arranged at a housing of the robot, or may be an external keyboard, an external touch pad, or an external mouse, etc.

Those skilled in the art can understand that the structure shown in FIG. 16 is merely a block diagram of a partial structure related to the solutions of the present disclosure, and does not constitute a limitation on the robot to which the solutions of the present disclosure are applied. The robot may include more or fewer components than shown in the figure, combine certain components, or have a different component arrangement.

In one embodiment, a robot is further provided, including a memory and a processor. A computer-readable instruction is stored in the memory. The steps in the above-mentioned method embodiments are implemented when the processor executes the computer-readable instruction.

In one embodiment, a computer-readable storage medium is provided, storing a computer-readable instruction. The steps in the above-mentioned method embodiments are implemented when a processor executes the computer-readable instruction.

In one embodiment, a computer program product or a computer program is provided. The computer program product or the computer program includes a computer-readable instruction stored in a computer-readable storage medium. A processor of a robot reads the computer-readable instruction from the computer-readable storage medium, and the processor executes the computer-readable instruction, so that the robot performs the steps in the above-mentioned method embodiments.

It can be understood by those ordinary skilled in the art that all or a part of processes in the above method embodiments can be completed by instructing a related hardware through a computer-readable instruction. The computer-readable instruction may be stored in a non-volatile computer-readable storage medium, and when executed, the computer-readable instruction can include the processes of the above method embodiments. Any reference to a memory, storage, database, or other media used in each embodiment provided by the present disclosure may include a non-volatile and/or volatile memory. The non-volatile memory may include a read-only memory (ROM), magnetic tape, floppy disk, flash memory, or optical memory. The volatile memory may include a random access memory (RAM) or an external cache memory. As an illustration and not a limitation, the RAM can be in various forms, such as a static random access memory (SRAM) or a dynamic random access memory (DRAM).

Technical features of the above-mentioned embodiments can be randomly combined. To provide a concise description, not all possible combinations of the technical features in the above-mentioned embodiments are described. As long as there is no contradiction in the combinations of the technical features, the technical features should be considered to be within the scope of the present disclosure.

The above-mentioned embodiments only describe some implementations of the present disclosure, and their descriptions are relatively specific and detailed but cannot be construed as limiting the scope of the present disclosure. It should be pointed out that, for those ordinary skilled in the art, multiple variations and improvements can be made without departing from the concept of the present disclosure and all belong to the protection scope of the present disclosure. Therefore, the protection scope of the present disclosure should be subject to the attached claims.

## Claims

1. A topological path graph generation method executed by a robot, the method comprising steps of:
obtaining a teaching trajectory corresponding to the robot, wherein the teaching trajectory comprises a sampling-point sequence;
determining target sampling points from each sampling point in the sampling-point sequence based on a preset screening rule, wherein the preset screening rule is determined based on a sampling frequency of each sampling point or a curvature of an arc formed by each sampling point and a corresponding adjacent sampling point;
connecting the target sampling points to generate each path containing the target sampling points, and constructing a first path graph based on the target sampling points and each path;
determining a target cyclic path from each cyclic path based on a morphological feature of each cyclic path in the first path graph;
removing the target cyclic path, and generating a target path based on the target sampling points contained in the removed target cyclic path; and
updating the first path graph based on the target path to obtain a target topological path graph.

2. The method according to claim 1, wherein the step of determining target sampling points from each sampling point in the sampling-point sequence based on a preset screening rule comprises steps of:
comparing the sampling frequency of each sampling point with a first threshold, and determining the sampling point whose sampling frequency is greater than the first threshold and the sampling points within a preset range thereof as a first sampling point;
determining the curvature corresponding to a target arc based on the target arc formed by each sampling point and the corresponding adjacent sampling point, and determining the sampling point whose curvature is greater than a second threshold as a second sampling point; and
determining the target sampling points based on the first sampling point and the second sampling point.

3. The method according to claim 1, wherein, after the step of connecting the target sampling points to generate each path containing the target sampling points, and constructing a first path graph based on the target sampling points and each path, the method comprises steps of:
determining a distance between each target sampling point and a directly adjacent path in the first path graph, and determining the target sampling point whose distance is smaller than a distance threshold as a reference sampling point, wherein the directly adjacent path is the path closest to the corresponding target sampling point but not the path where the corresponding target sampling point is located;
splitting the directly adjacent path corresponding to the reference sampling point to obtain segmented paths after splitting, so that the segmented paths pass through the reference sampling point; and
updating the first path graph based on the segmented paths to obtain an updated first path graph.

4. The method according to claim 1, wherein the morphological feature is configured to represent a morphology of a two-dimensional region enclosed by each cyclic path, and the step of determining a target cyclic path from each cyclic path based on a morphological feature of each cyclic path in the first path graph comprises steps of:
calculating the morphological feature of the two-dimensional region enclosed by each cyclic path in the first path graph;
comparing the morphological feature corresponding to each cyclic path with a standard morphology to obtain a comparison result; and
determining the target cyclic path from each cyclic path based on the comparison result.

5. The method according to claim 4, wherein the morphological feature comprises an area-to-perimeter ratio, and the step of determining a target cyclic path from each cyclic path based on a morphological feature of each cyclic path in the first path graph further comprises steps of:
calculating the area-to-perimeter ratio of the region enclosed by each cyclic path in the first path graph; and
determining the cyclic path corresponding to the area-to-perimeter ratio being smaller than a third threshold as the target cyclic path.

6. The method according to claim 5, wherein the area-to-perimeter ratio is a ratio of an area of the corresponding region to a perimeter of the corresponding region.

7. The method according to claim 1, wherein the step of removing the target cyclic path, and generating a target path based on the target sampling points contained in the removed target cyclic path, comprises steps of:
determining an exit sampling point in the target cyclic path, wherein the exit sampling point is the target sampling point that has at least three adjacent paths; and
determining a target connection point corresponding to the target cyclic path based on the exit sampling point in the target cyclic path, and generating the corresponding target path based on the target connection point.

8. The method according to claim 7, wherein the step of determining a target connection point corresponding to the target cyclic path based on the exit sampling point in the target cyclic path, and generating the corresponding target path based on the target connection point, comprises steps of:
when the target cyclic path contains one exit sampling point, removing the target cyclic path, and using other adjacent path corresponding to the exit sampling point as the target path; and
when the target cyclic path contains two exit sampling points, removing the target cyclic path, retaining the two exit sampling points, and generating the corresponding target path based on the two exit sampling points.

9. The method according to claim 7, wherein the step of determining a target connection point corresponding to the target cyclic path based on the exit sampling point in the target cyclic path, and generating the corresponding target path based on the target connection point, comprises steps of:
when the target cyclic path contains three or more exit sampling points, calculating a center point of a region enclosed by the target cyclic path; and
generating the corresponding target path based on the center point.

10. The method according to claim 9, wherein the step of when the target cyclic path contains three or more exit sampling points, calculating a center point of a region enclosed by the target cyclic path, comprises a step of:
when the target cyclic path contains the three or more exit sampling points, calculating a geometric center or centroid of the two-dimensional planar region enclosed by the target cyclic path.

11. The method according to claim 9, wherein the step of generating the corresponding target path based on the center point comprises a step of:
connecting each exit sampling point of the target cyclic path to the center point to generate the corresponding target path.

12. The method according to claim 9, wherein the step of generating the corresponding target path based on the center point comprises steps of:
detecting whether an obstacle exists at a center position of the first path graph;
when the obstacle exists, constructing an inscribed circle having a largest diameter within a remaining free space in the two-dimensional planar region enclosed by the target cyclic path, and using a center of the inscribed circle as the target connection point corresponding to the target cyclic path; and
connecting each exit sampling point of the target cyclic path to the target connection point to generate the corresponding target path.

13. A topological path graph generation apparatus, comprising:
a graph construction module configured to:
obtain a teaching trajectory corresponding to a robot, wherein the teaching trajectory comprises a sampling-point sequence,
determine target sampling points from each sampling point in the sampling-point sequence based on a preset screening rule, wherein the preset screening rule is determined based on a sampling frequency of each sampling point or a curvature of an arc formed by each sampling point and a corresponding adjacent sampling point, and
connect the target sampling points to generate each path containing the target sampling points, and construct a first path graph based on the target sampling points and each path;
a generation module configured to: determine a target cyclic path from each cyclic path based on a morphological feature of each cyclic path in the first path graph, remove the target cyclic path, and generate a target path based on the target sampling points contained in the removed target cyclic path; and
an update module configured to: update the first path graph based on the target path to obtain a target topological path graph, wherein the target topological path graph is configured for path navigation of the robot.

14. The apparatus according to claim 13, wherein the graph construction module is further configured to:
compare the sampling frequency of each sampling point with a first threshold, and determine the sampling point whose sampling frequency is greater than the first threshold and the sampling points within a preset range thereof as a first sampling point;
determine the curvature corresponding to a target arc based on the target arc formed by each sampling point and the corresponding adjacent sampling point, and determine the sampling point whose curvature is greater than a second threshold as a second sampling point; and
determine the target sampling points based on the first sampling point and the second sampling point.

15. The apparatus according to claim 13, wherein the generation module is further configured to:
determine an exit sampling point in the target cyclic path, wherein the exit sampling point is the target sampling point that has at least three adjacent paths; and
determine a target connection point corresponding to the target cyclic path based on the exit sampling point in the target cyclic path, and generate the corresponding target path based on the target connection point.

16. The apparatus according to claim 15, wherein the generation module is further configured to:
when the target cyclic path contains one exit sampling point, remove the target cyclic path, and use other adjacent path corresponding to the exit sampling point as the target path; and
when the target cyclic path contains two exit sampling points, remove the target cyclic path, retain the two exit sampling points, and generate the corresponding target path based on the two exit sampling points.

17. The apparatus according to claim 15, wherein the generation module is further configured to:
when the target cyclic path contains three or more exit sampling points, calculate a center point of a region enclosed by the target cyclic path; and
generate the corresponding target path based on the center point.

18. A robot, comprising a memory and a processor, wherein the memory stores a computer-readable instruction, and the computer-readable instruction is executed by the processor to implement the steps of the method according to any one of claims 1 to 12.

19. A computer-readable storage medium, storing a computer-readable instruction, wherein the computer-readable instruction is executed by a processor to implement the steps of the method according to any one of claims 1 to 12.

20. A computer program product, comprising a computer-readable instruction, wherein the computer-readable instruction is executed by a processor to implement the steps of the method according to any one of claims 1 to 12.
